Europäisches Patentamt

European Patent Office

Office européen des brevets

(19)

(11) Numéro de publication: **0 033 258**
**B1**

# (12) FASCICULE DE BREVET EUROPEEN

(45) Date de publication du fascicule du brevet: **21.11.84**

(51) Int. Cl.³: **F 03 D 7/02**

(21) Numéro de dépôt: **81400049.3**

(22) Date de dépôt: **14.01.81**

(54) **Aérogénérateur à axe d'orientation variable.**

(30) Priorité: **16.01.80 FR 8001160**
**24.12.80 FR 8027961**

(43) Date de publication de la demande:
**05.08.81 Bulletin 81/31**

(45) Mention de la délivrance du brevet:
**21.11.84 Bulletin 84/47**

(84) Etats contractants désignés:
**AT BE CH DE GB IT LI LU NL SE**

(56) Documents cités:
**DE-C- 647 287**
**FR-A- 652 209**
**FR-A- 948 645**
**FR-A-2 428 749**
**US-A-2 026 828**
**US-A-2 273 084**
**US-A-4 066 911**

(73) Titulaire: **STE AEROPOWER S.A.R.L.**
**Route Nationale 113**
**F-31450 Montgiscard (FR)**

(72) Inventeur: **Fontvieille-Carme, Anne Marie**
**Z.I. de Mélou**
**F-81100 Castres (FR)**
Inventeur: **Tremollière, Eliane**
**21, Résidence du Château**
**F-31450 Auzeville Tolosan (FR)**

(74) Mandataire: **Ravina, Bernard**
**Cabinet Bernard RAVINA 24, boulevard Riquet**
**F-31000 Toulouse (FR)**

Courier Press, Leamington Spa, England.

EP 0 033 258 B1

## Description

La présente invention a pour objet un aérogénérateur à axe d'orientation variable.

Les aérogénérateurs connus par exemple dans le US—A—2026828 ou le FR—A—948645 sont dotés d'un rotor porte pales fixé de manière rigide à un arbre qu'il entraîne en rotation, le dit arbre étant relié à un mécanisme de transformation du mouvement ou à un générateur de courant électrique.

Le mode de fixation rigide du rotor sur l'arbre rotatif provoque lorsque le vent souffle en rafale la flexion du dit arbre.

En fonction de la force du vent cette flexion peut se traduire par une déformation permanente de la partie de l'arbre dotée du rotor.

En outre, ce mode de fixation a pour conséquence lors de la variation brusque de l'intensité du vent d'entraîner des efforts importants au niveau du palier de l'arbre rotatif.

On a en outre observé que lors du démarrage de l'aérogénérateur l'arbre du rotor a tendance à décrire un mouvement désordonné préjudiciable au bon fonctionnement de l'ensemble.

Pour remédier à ces inconvénients les aérogénérateur de l'art actuel sont pourvus de dispositifs de régulation de la vitesse de rotation du rotor en sorte que lorsque l'intensité du vent croît la vitesse de rotation du dit rotor décroît.

Dans la plupart des cas les dispositifs de régulation sont montés dans le rotor et commandent l'inclinaison des pales en sorte qu'elles présentent au vent une surface d'attaque minimum lorsque celui-ci est violent.

La constitution de tel système exige dans la plupart des cas l'utilisation de nombreuses pièces, de fabrication relativement précises, qui alourdissent le rotor porte pales.

En outre, de tels systèmes exigent pour leur fabrication d'importants travaux d'usinage et de montage ce qui se traduit par un coût relativement élevé.

La présente invention a pour objet de supprimer au moins un des invonvénients énoncés ci-dessus en présentant un mode de fixation particulier du rotor sur son arbre.

A cet effet, la présente invention se caractérise essentiellement en ce que le rotor portepale est articulé par rapport à l'arbre ou axe rotatif et, dans les formes préférentielles, comporte des dispositifs d'amortissement des efforts exercés par le vent sur ses pales.

Suivant une caractéristique préferée de l'invention, le système de régulation de la vitesse du rotor est constitué par des moyens commandant le mouvement angulaire de l'arbre ou axe rotatif selon une direction parallèle à celle des vents en sorte que le plan du rotor incliné par rapport à la verticale selon une position limite initiale où il présente un maximum de surface d'attaque au vent se redresse pour venir occuper en fonction de l'intensité des vents, soit une position limite finale, où il présente une surface d'attaque nulle ou de valeur minimum, soit une position intermédiaire entre ces deux positions limités, la variation de la surface d'attaque se traduisant par une régulation de la vitesse du rotor.

Selon une autre caractéristique préferée de l'invention, les dits moyens commandant le mouvement angulaire de l'arbre rotatif sont commandés à partir d'un dispositif de mesure de la vitesse de rotation du rotor.

D'autres avantages et caractéristiques de l'invention apparaîtront à la lecture de formes préférentielles de réalisation de l'invention données à titre d'exemples non limitatifs avec référence aux dessins annexés en lesquels:

— La figure 1 est une vue partielle d'un rotor d'aérogénérateur selon l'invention.

— La figure 2 est une vue en élévation latérale d'une forme de réalisation de l'aérogénérateur selon l'invention.

— La figure 3 est une vue partielle face au vent de l'aérogénérateur selon la figure 2.

— La figure 4 est une vue en élévation et en coupe partielle d'une seconde forme de réalisation de l'aérogénérateur selon l'invention.

— La figure 5 est une vue cynoptique du dispositif d'orientation de l'aérogénérateur par rapport au vent.

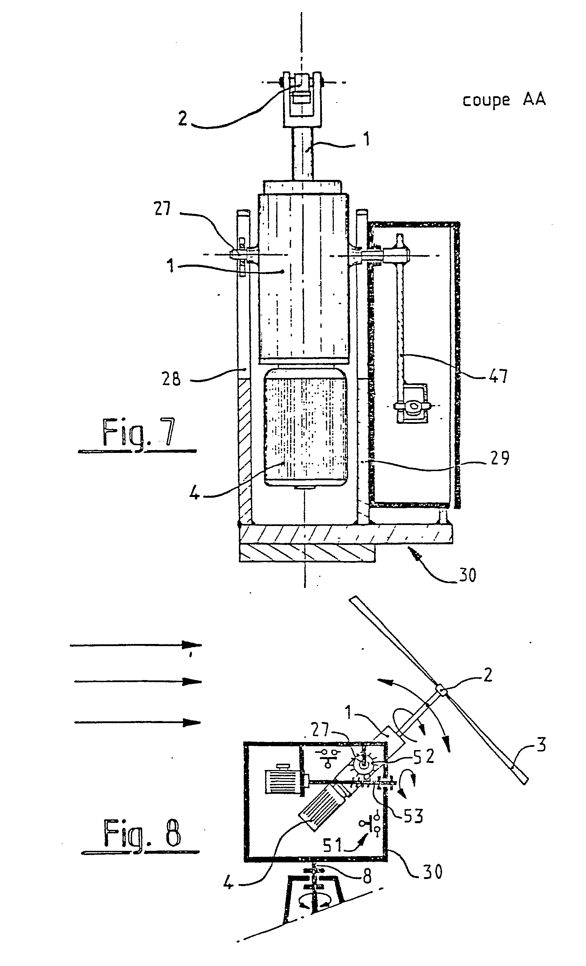

— La figure 6 est une vue de la fig. 4 suivant le repère BB.

— La figure 7 est une vue de la fig. 4 suivant le repère AA.

— Les figures 8, 9, 10 et 11 sont des vues schématiques de modes de réalisation de l'invention.

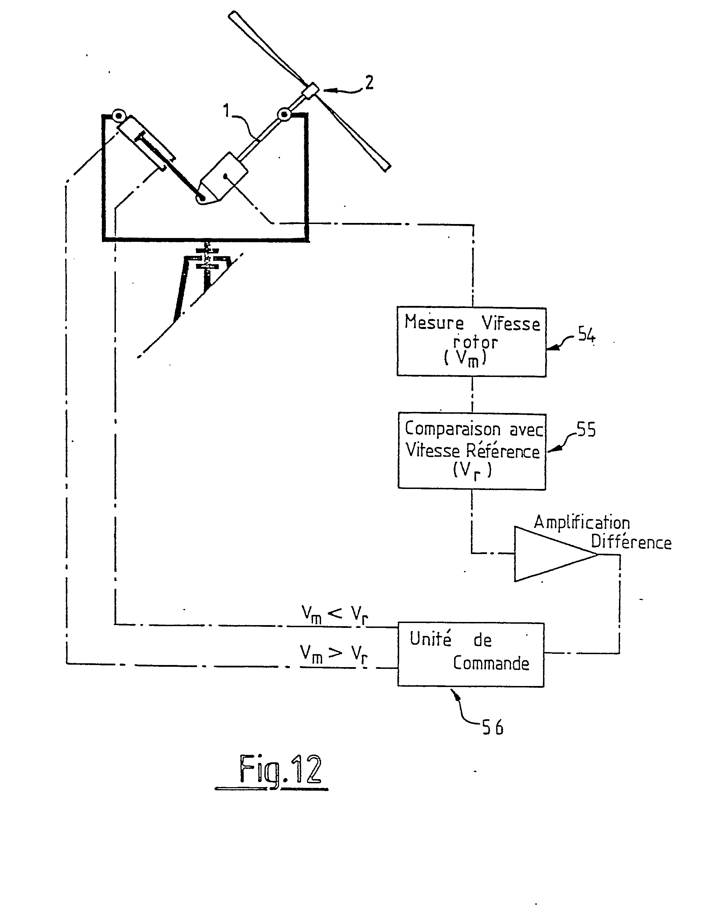

— La figure 12 est une vue synoptique du procédé de régulation de la vitesse.

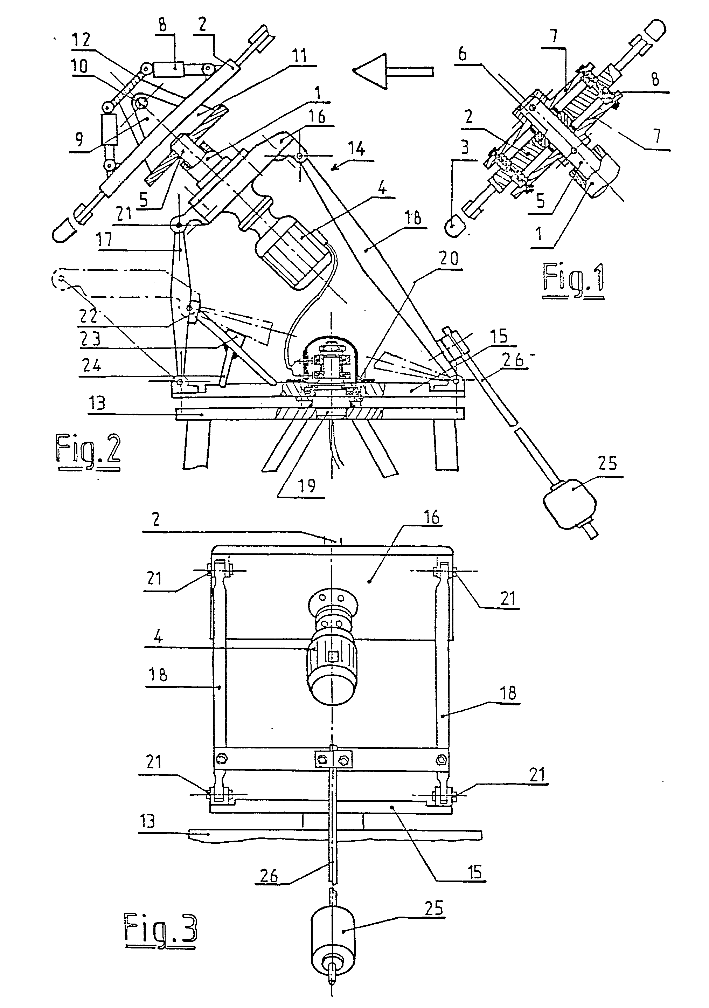

Tel que représenté en figure 1 l'aérogénérateur selon invention comporte un arbre ou axe 1 à orientation variable pourvu à l'une de ses extrémités d'un rotor 2 doté d'au moins une pale 3 et lié à l'autre extrémité à un appareil 4 (fig. 2) d'utilisation directe de l'énergie produite par la rotation ou de transformation de cette énergie tel que par exemple un générateur d'électricité.

Le dit aérogénérateur comporte un système de régulation de la vitesse de rotation du rotor consistant en des moyens qui seront décrits plus avant commandant le mouvement angulaire de son axe 1 dans un plan vertical positionné parallèlement à la direction du vent, ce positionnement s'effectuant soit directement au moyen d'un gouvernail par exemple, soit indirectement au moyen d'un détecteur de direction commandant un organe d'orientation. Le moteur éolien tel que décrit est monté rotatif par son axe 1 sur un pylone.

Tel que représenté en figure 1 le rotor 2 se présente sous la forme d'un plateau circulaire doté d'au moins un pale 3 radiale, amovible, d'angle d'attaque au vent réglable fixées à la périphérie du plateau par tous moyens connus de l'homme de l'art.

Pour éviter toute déformation permanente en flexion de l'arbre rotatif 5 du rotor relié à l'axe par tous moyens connus, causé par l'action d'une rafale de vent exercée sur les pales du rotor et pour éviter que cette action très brève ne se reporte sur les paliers du dit arbre le rotor est monté sur celui-ci de manière articulée et est pourvu d'un système d'amortissement.

A cet effet, le rotor 2 est monté sur une rotule 6 dont la bague intérieure est fixée sur l'arbre rotatif 5 et est disposée entre deux parois circulaires ou en étoiles 7 perpendiculaires au dit arbre 5 sur lequel elle se fixe et concentrique à celui-ci. Entre ces deux parois en coopération avec le rotor 2 sont montés les dispositifs d'amortissement 8.

Ces dispositifs se présentent de préférence sous la forme d'un cylindre en matériau souple et élastique tel que du caoutchouc ou analogue et sont montés de part et d'autre du rotor contre celui-ci et parallèlement à l'arbre rotatif 5.

Selon une fore préférée de réalisation les organes amortisseurs sont disposés deux à deux axialement alignés et montés chacun de part et d'autre du rotor et engagés dans celui-ci par une de leurs extrémités.

Chacune des paires d'organes d'amortissement est fixée aux parois 7 et au rotor 2 par un boulon engagé dans un orifice transversal à ces différents éléments et pourvu d'un écrou de serrage. On conçoit aisément que les organes d'amortissement vont encaisser les chocs crées par les rafales de vent sur les pales et diminuer le travail de flexion de l'arbre rotatif sous l'influence de ces chocs.

En outre l'expérience à montré que cette disposition permet d'éviter lors du démarrage du rotor le mouvement désordonné de l'axe rotatif 5.

Selon une autre forme de réalisation présentée en figure 2 le rotor est pourvu de deux pales 3 et se présente sous la forme d'une tige cylindrique disposée transversalement par rapport à l'arbre rotatif 5 en sorte que leurs axes de symétrie soient sécants.

Ce rotor comme dans l'exemple de réalisation décrit plus avant est articulé par rapport à l'arbre 5 et comporte des organes d'amortissement 8.

A cet effet, la tige cylindrique constituant le rotor est dotée d'un moyen d'articulation tel une paroi plane 9 ou une biellette à axe d'articulation 10 perpendiculaire à l'arbre rotatif 5 et au rotor 2.

Cet axe 10 est porté par une chape 11 fixée en bout de l'arbre rotatif 5 et entre les flancs de laquelle est monté le rotor 2. La chape 11 est dotée d'un bras transversal 12 portant en extrémité un organe d'amortissement 8 coopérant avec le rotor 2. Dans cet exemple de réalisation l'organe 8 est de préférence constitué par un amortisseur hydraulique, mais il va de soi qu'il peut être constitué par tout autre dispositif remplissant la même fonction.

La vitesse du rotor 2 est régulée par un système évitant la destruction de celui-ci sous l'action d'un vent violent.

Ce système est constitué par des moyens commandant le mouvement angulaire de l'axe 1 et de l'arbre 5 du rotor relié à l'axe 1 selon une direction parallèle au sens du vent lorsque celui-ci croît en intensité en sorte que le plan du rotor incliné par rapport à la verticale vers l'arrière et face au vent en position limite initiale où il présente un maximum de surface d'attaque au vent se redresse pour venir occuper en fonction de l'intensité du vent soit une position limite finale où il présente une surface d'attaque au vent nulle ou de valeur minimum ou occupe une position intermédiaire entre ces deux positions limites.

La variation de la surface d'attaque au vent du plan du rotor ou de ses pales se traduit par une régulation de la vitesse de rotation du dit rotor, soit en vue d'obtenir une vitesse de rotation constante, soit en vue d'obtenir une vitesse de rotation en relation avec la valeur de la demande d'énergie.

En figure 2 est représenté associé au dit rotor articulé 2 une forme de réalisation du système de régulation.

Selon cette forme de réalisation l'aérogénérateur selon l'invention est monté en extrémité d'un pylone vertical sur lequel est fixée une plate forme 13 horizontale. Sur la plate forme 13 est montée une structure déformable 14 pourvue d'une générateur 4 de l'axe 1 et du rotor 2.

Cette structure est mobile autour de la verticale afin de permetre au plan du rotor de se disposer sous le vent.

Elle est constituée par un plateau inférieur 15 horizontal, réuni à un plateau supérieur 16 par au moins deux biellettes 17 et 18 articulées aux dits plateaux.

Le plateau inférieur 15 de forme polygonale circulaire ou autre est doté d'un orifice cylindrique dans lequel s'engage un moyen 19 de pivotement de la structure autour de la verticale.

Ce moyen est constitué par un macaron cylindrique d'axe vertical solidaire de la plate forme 13 et faisant saillie sur celle-ci. Sur ce macaron et entre la plate forme 13 et le plateau 15 est monté en force un organe de roulement 20, capable d'encaisser des efforts radiaux et normaux et dont une des bagues est solidaire de la dite plate forme et l'autre du plateau inférieur 15 de la structure 14.

Ce montage connu de l'homme de l'art permet tout en assurant la rotation de la structure autour de la verticale de lier celle-ci en translation par rapport à la plate-forme 13 ce qui évite tout risque de dissociation de la dite structure avec le pylone vertical.

Le plateau inférieur 15 est doté d'au moins deux points d'articulation des biellettes réunissant le dit plateau 15 au plateau supérieur 16.

Ces points d'articulation sont constitués chacun par une chape pourvue d'un axe d'articulation horizontal et transversal à la direction du vent en sorte que les biellettes soient animées par rapport au plateau d'un mouvement de rotation, ce mouvement se faisant suivant un plan vertical parallèle à la direction du vent.

De préférence, la structure déformable comporte deux jeux parallèles de deux biellettes 17 et 18 d'inégales longueurs, articulées chacune au plateau inférieur et au plateau supérieur ceux-ci étant dotés chacun de quatre points d'articulation 21 (Fig. 3).

Le plateau supérieur 16 de forme polygonale ou circulaire est pourvu en son centre d'un orifice de passage du fourreau de l'axe 1 perpendiculaire au dit plateau.

Ce fourreau est fixé au plateau 16 par une bride au moyen de tous dispositifs connus.

Dans l'espace défini par la structure déformable est monté la générateur (4) fixé de préférence à la face inférieure du plateau 16.

Chacun des jeux de biellettes 17 et 18 définissent avec les plateaux 16 et 15 un polygone déformable et plus particulièrement un quadrilatère déformable dont le plan est vertical et parallèle à la direction du vent.

Les côtés de ce quadrilatère définis par le jeu de biellettes 17 et 18 et par chacun des plateaux 15 et 16 sont dimensionnés par de telles manières que lors de la déformation du dit quadrilatère le plateau 16 initialement incliné par rapport à la verticale, vient en position finale se disposer horizontalement comme représenté en traits mixtes fins en figure 2.

Dans l'ensemble de réalisation décrit, le plateau 16 en position initiale est incliné à 60° par rapport à l'horizontale, mais il va de soi que la valeur de cet angle d'est donnée ici qu'à titre d'exemple.

Le plateau 16 lors de la déformation de la structure 14 est animé d'un mouvement de rotation autour d'un axe horizontal et transversal à la direction du vent et le dit axe est animé d'un mouvement de translation, transversalement à la direction du vent et suivant une ligne courbe dont la courbe est dirigée vers le plateau inférieur 15.

L'axe 1 quant à lui pour passer de la position initiale, où il est incliné par rapport à la verticale, en position verticale, est animé d'un mouvement angulaire selon un plan vertical parallèle à la direction du vent.

Ce mouvement angulaire s'effectue autour d'un axe mobile en translation et disposé face au vent.

Comme on le conçoit aisément, l'axe 1 lorsqu'il se redresse pour venir se disposer verticalement est mobile angulairement selon un sens inverse à celui du vent.

Pour limiter le mouvement de l'axe 1 la structure déformable 14 est pourvue de butées 22 et 23 portées par un bras 24 fixé au plateau inférieur 15 et coopérant respectivement avec les biellettes 17 et 18.

Ces butées sont de préférence réglable pour fixer les positions limites de l'axe 1.

Avantageusement la structure 14 est pourvue d'au moins un organe de rappel en position initiale.

De préférence cet organe constitué par un contre poids amovible 25 porté par un bras 26 disposé dans le prolongement du plan défini par les deux biellettes 18 ou parallèlement à celui-ci et solidaire de la structure par tous moyens connus.

L'action du vent sur les pales du rotor va provoquer la rotation de celui-ci et la déformation de la structure 14 constituant le système de régulation.

En fonction de l'intensité du vent l'axe 1 va se redresser plus ou moins pour faire varier l'angle d'attaque du plan du rotor et par conséquent sa vitesse de rotation.

Ce mouvement de redressement est contrebalancé par l'action du contre poids qui permet d'équilibrer l'ensemble en position limite ou intermédiaire et ceci en fonction de la force exercée par le vent sur les pales du rotor.

Selon une autre forme de réalisation de l'invention les moyens d'inclinaison de l'axe 1 sont commandés à partir d'un dispositif de mesure de la vitesse de rotation du rotor qui selon le résultat de la mesure commande si necessaire les dits moyens en sorte qu'ils agissent sur l'inclinaison du dit axe 1 ce qui entraîne une variation de la surface d'attaque au vent, de manière à ce que la surface d'attaque soit telle que le vitesse de rotation du rotor reste sensiblement constante quelle que soit la variation d'intensité des vents par exemple ou la demande d'énergie.

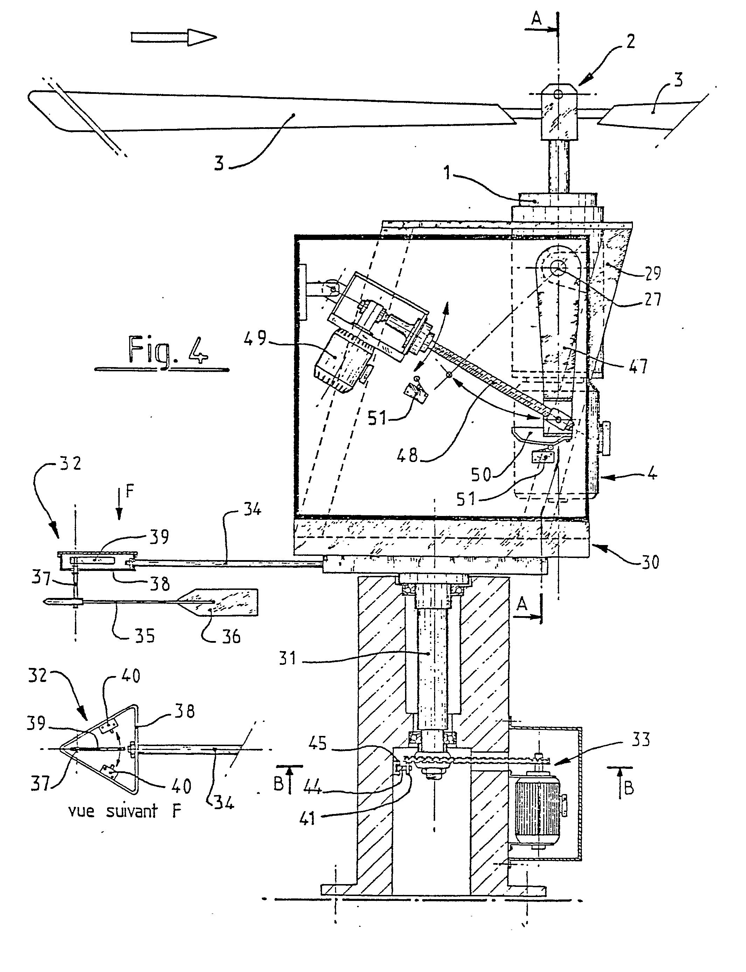

Tel que représenté à la figure 4, l'axe d'orientation variable 1 est articulé en rotation autour d'un axe horizontal 27 dans un plan vertical situé entre deux montants verticaux 28 et 29 d'un bâti 30.

De préférence les dits montants 28 et 29 sont inclinés vers l'arrière par rapport à la verticale en sorte qu'en position sensiblement verticale du rotor la traînée du pylone soit écartée du rotor.

Le dit bâti 30 est monté de façon connue en bout d'un arbre vertical 31 tournant sur lui-même de manière susceptible à permettre un positionnement du plan vertical dans lequel se meut l'axe d'orientation variable 1, par pivotement autour du dit arbre 31 selon une direction parallèle à celle du vent.

A cet effet, l'aérogénérateur selon l'invention comporte au moins un dispositif 32 détecteur de direction du vent qui transmet de manière connue les informations à un moyen 33 d'entraînement en rotation du dit arbre.

Le dit moyen de entraînement 33 est de préférence un motoréducteur lié de façon connue tel qu'au moyen d'un chaine et de pignons à l'extrémité du dit arbre 31.

Le dispositif 32 détecteur de direction du vent fixé de préférence en extrémité d'une tige 34 liée au bâti 30 parallèlement au plan vertical où se meut l'axe d'orientation variable 1 se compose préférentiellement d'une tige 35 munie à l'une de ses extrémités d'une palette 36 et fixé à son autre extrémité à un axe vertical 37 monté pivotant sur un boîtier 38.

A l'intérieur du dit boîtier 38 une plaquette 39 est liée solidairement par l'une de ses extrémités au dit axe 37.

Selon l'orientation de la palette 36 dans le plan horizontal dans lequel elle se meut, la dite orientation est obtenue selon la direction du vent, la plaquette 39 est susceptible de venir actionner angulairement en buté l'un des micro-contacts 40 fixés chacun de part et d'autre de la dite plaquette (39).

Chacun des micro-contacts est relié de façon connue tel que par collecteur à bagues ou par télécommande au boîtier de commande du mouvement en rotation du moto-réducteur 33.

Selon la micro-contact actionné, le moto-réducteur 33 agit en sorte de faire pivoter la bâti 30 et donc le dit dispositif 32 détecteur de direction du vent dans un sens bien déterminé selon le micro contact actionné jusqu'à ce que le dit micro contact ne soit plus actionné ce qui correspond à un positionnement du plan vertical dans lequel se meut l'axe à orientation variable 1 sensiblement parallèle à la direction des vents.

Afin d'obtenir une position parallèle à la direction du vent relativement précise du dit plan vertical dans lequel fait rotation l'axe 1 les deux micro-contacts 40 sont fixés à une distance l'un de l'autre sensiblement supérieure à l'épaisseur de la plaquette 39.

Selon une forme préférentielle de réalisation chacun des dits micro-contacts est relié par cablage à l'unité de commande électrique du moto-réducteur 33 d'entraînement en rotation de l'arbre 31 qui en la circonstance n'est susceptible d'effectuer qu'un tour complet sur lui-même ou sensiblement un peu plus d'un tour complet.

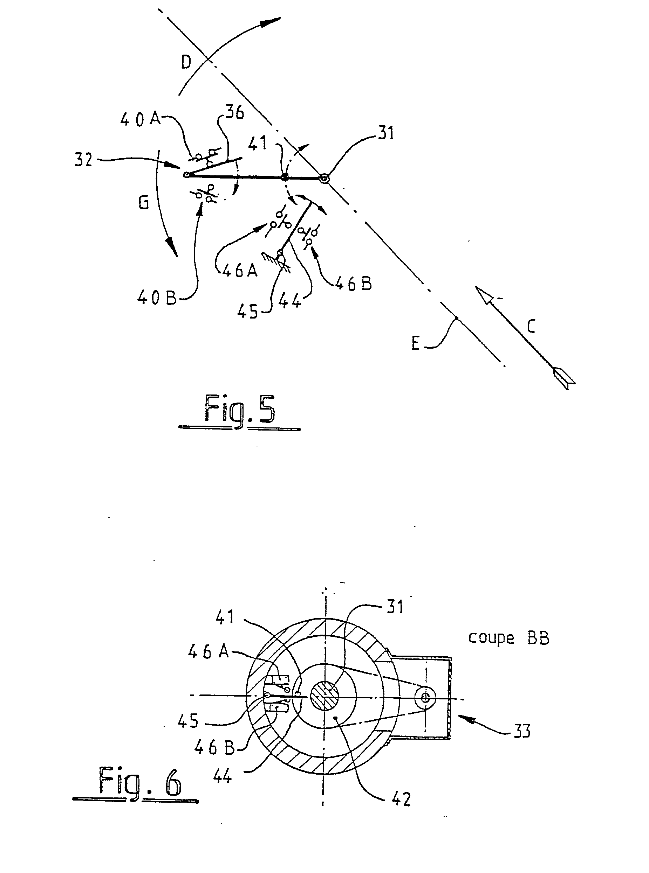

L'orientation du plan vertical dans lequel est susceptible de s'incliner l'axe orientable 1 s'effectue de la manière suivante et à l'aide des moyens suivants (fig. 5. 6).

Un doigt 41 est lié de manière connue à l'arbre 31 parallèlement à l'axe de rotation de celui-ci.

De préférence le dit doigt 41 est fixé perpendiculairement à un disque 42 lié de façon connue perpendiculairement au dit arbre 31. Le dit disque 42 pouvant être la surface plane circulaire de la roue dentée d'entraînement en rotation de l'arbre 31 qui coopère par chaîne par exemple avec le motor réducteur 33.

Le dit doigt 41 est fixé sur le disque 42 dans un plan vertical fictif passant par l'axe de rotation de l'arbre 31 et qui contient le dispositif 32 détecteur de direction ainsi que le plan vertical dans lequel est susceptible de se mouvoir l'axe orientable.

Le dit doigt 41 lors de sa rotation commandée avec l'arbre 31 autour de l'axe de celui-ci est susceptible de venir actionner une palette 44 articulée autour d'un axe vertical 45 situé à l'extérieur de la trajectoire circulaire décrite par le dit doigt 41 lors de la dite rotation et positionnée radialement à l'axe de rotation de l'arbre 31 dans un plan sensiblement horizontal sécant avec l'axe du dit doigt 41.

De parts et d'autre de la dite palette 44 sont fixés des micro-contacts 46A et 46B susceptibles d'être actionnés individuellement par la dite palette lors du pivotement de celui-ci autour de son axe 45.

Le dit pivotement étant provoqué comme décrit précédemment par le doigt 41.

Cette disposition a pour but de stopper puis d'inverser le mouvement de rotation du doigt 41 et donc du dispositif 32 détecteur de direction de manière que le dit dispositif 32 ne puisse pas effectuer plusieurs tours autour de l'axe de l'arbre 31 en sorte que le cablage reliant les micro-contacts 40 du dit dispositif à l'unité électrique de commande du moto-réducteur 33 ne soit pas exagérément sollicité en torsion ce qui entraînerait sa rupture.

Le fonctionnement du dit système de positionnement du dispositif 32 face au vent sera mieux compris après la description suivante avec référence à la fig. 5 d'un exemple de positionnement face au vent du dit dispositif 32.

Tel que représenté schématiquement à la figure 5, le dispositif 32 détecteur de direction du vent se trouve par exemple au repos dans une position quelconque.

Un vent soufflant dans le sens représenté par la flèche C se lève entraînant angulairement jusqu'en butée la palette 36 du dit dispositif qui actionne alors le micro contact 40A.

Le dit micro-contact 40A commande par l'intermédiaire d'une unité électrique non représentée, le motor réducteur 33 en sorte que le dit dispositif 32 soit susceptible de venir au plus court par rotation occuper une position face au vent.

Si le dit dispositif 32 se trouvait au repos par rapport au plan vertical E parallèle à la direction du vent et passant par l'axe de rotation de l'arbre 31 du côté du dit plan où ne se trouve pas la palette 4 de limitation du mouvement angulaire de l'arbre 31, la palette 36 du dispositif 32 aurait actionnée le micro-contact 40B et le dit dispositif 32 aurait été directement emmené face au vent par rotation angulaire de plus faible valeur, c'est-à-dire selon la flèche D.

Mais si tel que représenté à la fig. 5, le dit dispositif 32 est situé par rapport au dit plan E, du côté où se trouve la palette 44 de limitation du mouvement angulaire de l'arbre 31 sur lui-même, le dit dispositif 32 qui est entraîné en rotation par le moto-réducteur, en sorte de venir par rotation angulaire de plus faible valeur face au vent, ce qui correspond au sens de rotation représenté par la flèche G, sera stoppé dans son mouvement lorsque le doigt 41 situé dans le même plan vertical que le dit dispositif actionnera la palette 44 de limitation du mouvement angulaire de l'arbre 31.

Le dite palette 44 actionnant dans le cas représenté en figure 5 le micro contact 46B.

Le dit micro contact 46B commande par l'intermédiaire de la dite unité électrique non représentée et du moto-réducteur l'arrêt puis l'inversion du mouvement de rotation du dit dispositif 32. L'action du micro-contact 46B devenant prioritaire par rapport au micro-contact 40A pour la commande du moto-réducteur 33 jusqu'à ce que le dit micro-contact 40A ne soit plus actionné ce qui correspond au passage par rotation selon le sens représenté par la flèche D de l'autre côté du dit plan E, où le contact 40B est actionné à son tour et permet alors comme décrit précédemment de commander le moto-réducteur 33 dans le même sens de rotation, c'est-à-dire le sens représenté par la flèche D jusqu'à ce que le micro-contact 40B ne soit plus actionné à son tour, ce qui correspond à la position recherchée du dispositif 32 face au vent.

Selon une forme préférentielle de réalisation, les moyens de commande du mouvement angulaire de l'axe d'orientation variable 1 autour de son axe d'articulation 27 se composent d'un bras rotatif 47 lié par l'une de ses extrémités au dit axe à orientation variable 1 de manière connue en sorte d'entraîner celui-ci en rotation autour de son axe d'articulation lors du pivotement commandé du dit bras 47 autour d'un axe horizontal parallèle ou confondu avec ce dernier et d'un dispositif d'entraînement en rotation du dit bras.

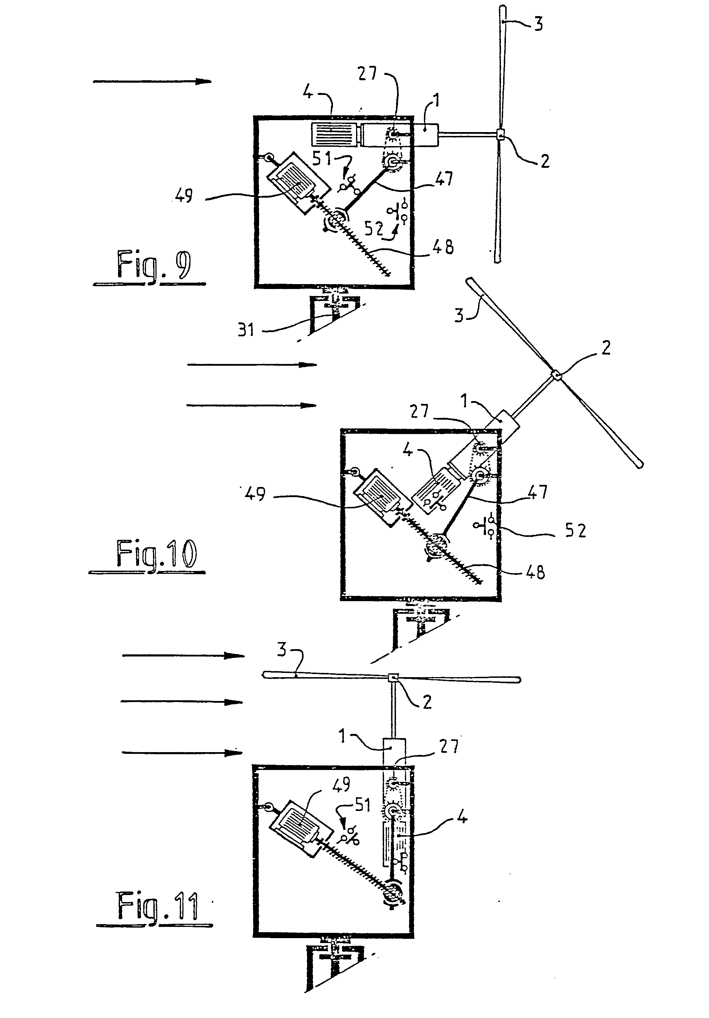

De préférence, et tel que représenté aux fig. 4 et 7 le dit bras 47 est lié directement avec l'axe orientable 1 en sorte de pivoter simultanément autour du même axe horizontal 27.

Selon d'autres formes de réalisations telles que représentées aux fig. 9, 10, et 11, le dit bras 47 est monté pivotant autour d'un axe parallèle à l'axe 27 de rotation de l'axe orientable 1, la liaison entre ce dernier et la dit bras 47 étant réalisée par tous moyens connus tels que par pignons et chaînes ou par engrenages de manière à amplifier le débattement du dit bras 47.

Le dit dispositif d'entraînement en rotation du dit bras est de préférence constitué d'un verin à vis 48 commandé en rotation à partir d'un moto-réducteur 49 et muni à chacune de ses extrémités d'une articulation le reliant d'une part à l'extrémité du dit bras 47 et d'autre part au bâti 30.

Le bras 47 est doté d'une came 50 en sorte d'actionner dans des positions dites de fin de course des micro-contacts 51 correspondant aux positions angulaires maximales de l'axe orientable 1.

Les dites positions étant de préférence d'une part une position horizontale du dit axe, ce qui correspond à une surface d'attaque au vent maximale, et une position verticale ou proche de la verticale du dit axe qui correspond à une surface minimale d'attaque au vent.

Selon une autre forme de réalisation des moyens d'inclinaison de l'axe d'orientation variable 1 telle que représentée schématiquement à la fig. 8 le mouvement angulaire du dit axe 1 est obtenu au moyen d'un dispositif à roue et vis sans fin dont la roue dentée 52 fixée de façon connue au dit axe d'orientation variable 1 sur son axe d'articulation 27 coopère avec la vis sans fin 53 qui est entraînée en rotation par tous moyens connus tel qu'au moyen d'un moto-réducteur.

Des micro-contacts 51 coopérant avec des butées liées au dit axe 1 en sorte de signaler comme décrit précédemment les positions de fin de course correspondant d'une part à une position horizontale du dit axe 1 et d'autre part à une position verticale du même axe.

Quelle que soit la forme de réalisation des moyens d'inclinaison de l'axe 1, les dit moyens sont commandés à partir d'un dispositif 54 de mesure de la vitesse de rotation du rotor qui selon le résultat de la mesure commande si nécessaire les dits moyens en sorte qu'ils agissent sur l'inclinaison du dit axe 1 ce qui entraîne une variation de la surface d'attaque au vent, de manière à ce que la surface d'attaque soit telle que la vitesse de rotation du rotor reste sensiblement constante quelle que soit la variation d'intensité des vents par exemple ou de manière à réguler sa vitesse en fonction de la puissance demandée. Le procédé de régulation de la vitesse de rotation du rotor 2 de l'aérogénérateur tel que précédemment décrit consiste à mesurer par tous moyens connus 54 temporairement ou de façon permanente la vitesse de rotation (Vm) du dit rotor 2 de manière directe ou de manière indirecte.

La dite mesure est ensuite comparée au moyen d'une unité 55 électrique ou électronique avec une grandeur électrique déterminée et fixée par le constructeur et correspondant à une vitesse de référence (Vr).

Selon la résultat de la dite comparaison, s'il y a différence entre la vitesse de rotation mesurée (Vm) et la vitesse de référence (Vr) une unité 56 électrique ou électronique commande les moyens d'entraînement en rotation angulaire de l'axe orientable 1 de manière à présenter une surface d'attaque au vent plus grande si la vitesse mesurée (Vm) est inférieure à la vitesse de référence (Vr) ou une surface d'attaque au vent plus réduite si la dite vitesse mesurée (Vm) est supérieur à la dite vitesse de référence (Vr) ceci jusqu'à ce que la dite différence entre la vitesse mesurée (Vm) et la vitesse de référence (Vr) soit nulle.

Selon une autre forme préférentielle de réalisation, le dit dispositif de mesure 54 de la vitesse de rotation du rotor 2 comporte un moyen de mesure de la fréquence du courant alternatif produit par un générateur électrique 4 entraîné par le dit rotor 2.

A cet effet, la fréquence du courant qui est fonction de la vitesse se de rotation du rotor est mesurée de préférence au moyen d'un système électronique comportant une bascule monostable dont les largeurs d'impulsions préalablement définies dont déclenchées en un point quelconque de l'onde ou de la demi-onde du courant alternatif produit par la générateur.

Les dites impulsions ainsi produites sont de préférence comptées électroniquement de manière connue ce qui va permettre de déterminer la fréquence du courant alternatif produit par le dit générateur 4 entraîné à partir du rotor 2 de l'aérogénérateur selon l'invention et donc la vitesse de rotation du dit rotor.

La dite fréquence du courant alternatif produit par le dit générateur et ainsi déterminée ou le nombre d'impulsions ainsi comptées sur un temps déterminé est comparé respectivement avec une fréquence de référence ou un nombre d'impulsions de référence.

La dite comparaison va permettre de détecteur s'il y a une différence entre la vitesse de rotation du rotor ainsi mesurée et la vitesse de référence fixée par le constructeur et de commander si une différence existe les moyens d'entraînement en rotation angulaire de l'axe orientable 1 de manière conforme au procédé tel que précédemment décrit.

Selon une variante de réalisation les impulsions déclenchées par la bascule monostable en un point quelconque de l'onde ou de la demi-onde du courant alternatif produit par le dit générateur 4 entraîné à partir du rotor 2 de l'aérogénérateur selon l'invention sont intégrées de manière à fournir une tension continuellement variable qui est mesurée directement et de manière connue en sorte de déterminer la fréquence du dit courant alternatif et ainsi la vitesse de rotation du dit rotor.

Selon d'autres variantes de réalisation la mesure de la fréquence du courant alternatif produit par un générateur électrique 4 entraîné à partir du rotor 2 est effectué par tous moyens connus tel qu'au moyen d'un fréquencemètre à lames vibrantes ou un fréquencemètre électronique ou encore au moyen d'un discriminateur de fréquence par exemple.

Selon une autre forme de réalisation, le dispositif 54 de mesure de la vitesse de rotation du rotor 2 comporte un moyen de comptage des impulsion électriques produites par un organe rotatif entraîné par le dit rotor tel que par exemple un disque partiellement occulté ou une masse magnétique, coopérant de manière connue avec un moyen approprié de production d'impulsions électriques tel que par exemple un oscillateur électrique à changement d'état à chaque passage du dit organe rotatif, ou des cellules phot-électriques positionnées de part et d'autre du disque partiellement occulté par exemple ou encore un système détecteur de champ magnétique tel que par exemple un système à effet "Hall" ou une magnétorésistance.

Selon une autre forme de réalisation, le dispositif 54 de mesure de la vitesse de rotation du rotor 2 comporte un moyen de mesure de la tension issue d'un générateur principal d'electricité entraîné par le dit rotor pour une utilisation industrielle ou domestique de celle-ci ou de la tension issue d'un générateur auxiliaire délivrant une tension fonction de sa vitesse de rotation tel que par exemple une génératrice tachymètrique.

Le dit moyen de mesure de la dite tension est du type connu tel que par exemple un voltmètre.

Selon une autre forme de réalisation, le dispositif 54 de mesure de la vitesse de rotation du rotor 2 comporte un moyen de mesure du débit d'un fluide tel qu'un débitmètre par exemple branché de manière connue à la sortie d'un appareil tel qu'une pompe, une turbine ou un moteur hydraulique directement ou indirectement entraîné à partir du rotor.

Selon une autre forme de réalisation, le dispositif de mesure de la vitesse de rotation du rotor 2 comporte un moyen de mesure de la pression d'un fluide tel qu'un manomètre par exemple branché de manière connue à la sortie d'un appareil de débit d'un fluide gazeux ou non gazeux entraîné directement ou indirectement par le dit rotor.

Le dit appareil pouvant être une pompe, une turbine ou un moteur hydraulique par exemple.

Selon une autre caractéristique de l'invention l'appareil accouplé au dit aérogénérateur est utilisé momentanément pour le demarrage du dit aérogénérateur lorsque le demarrage à lieu lors de vents de faible intensité en sorte de lancer le mouvement de rotation du rotor.

A cet effet, et à titre d'exemple, dans le cas où l'appareil entraîné 4 est un générateur d'électricité, le dit générateur est momentanément utilisé comme un moteur électrique auquel on fournit momentanément du courant électrique alternatif au moyen d'un onduleur par exemple, en sorte d'effectuer le lacement du rotor 2.

Selon une variante de réalisation l'aérogénérateur selon l'invention est doté d'un lanceur indépendant tel qu'un demarreur du type de ceux utilisés dans l'industrie automobile par exemple, coopérant momentanément et de manière connue avec le rotor pour effectuer si necessaire son lancement, par exemple au moyen d'une couronne dentée fixée sur l'axe du rotor.

l'aérogénérateur selon l'invention, excepté l'axe orientable 1, le rotor 2 doté de ses pales et le dispositif détecteur de direction du vent sont protégés des intempéries au moyen d'une coffret de préférence hermétique et verrouillable.

Il en est de même de tous les circuits électriques et de l'unité électronique ou électrique de mesure, de comparaison et de commande.

L'aérogénérateur selon la présente invention contraîrement aux aérogénérateurs connus permet son utilisation sans dangers même lorsque les vents atteignent de grandes vitesses de l'ordre de plus de 100 Km/h par exemple, où la position quasiment horizontale du plan de rotation des pales battantes du fait de leur articulation qui permet du rotor 2 de continuer à tourner à vitesse sensiblement constante et donc à produire de l'énergie, constitue une position de protection de l'appareil 4 entraîné à partir du dit rotor.

Il va de soi que l'invention n'est pas limitée aux différentes formes de réalisation qui viennent d'être décrites et qui ont été données à titre d'exemples purement indicatifs mais non limitatifs.

## Revendications

1. Aérogénérateur comportant un axe (1) à orientation variable pourvu à une de ses extrémités d'un rotor 2 doté d'au moins une pale (3) et lié à son autre extrémité par tous moyens connus à un appareil (4) d'utilisation directe ou de transformation de l'énergie produite par le dit aérogénérateur, tel qu'un générateur d'électricité par exemple et un système de régulation de la vitesse de rotation du dit rotor en fonction de la force du vent ou de la valeur de la demande d'énergie caractérisé en ce que le rotor porte pale (2) est articulé par rapport à l'axe (1) à inclinaison variable.

2. Aérogénérateur selon la revendication 1 caractérisé en ce que le système de régulation de la vitesse du rotor est constitué par des moyens commandant automatiquement le mouvement angulaire de l'axe à orientation variable dans un plan vertical parallèle à la direction du vent lorsque son intensité croît en sorte que le plan du rotor incliné par rapport à la verticale selon une position limite initiale où il présente un maximum de surface d'attaque au vent, se redresse pour venir occuper en fonction de l'intensité du vent ou de la valeur de la demande d'énergie, soit un position limite finale où il présente une surface d'attaque au vent très faible ou nulle du fait de son articulation soit une position intermédiaire entre les deux positions limites, la variation de la surface d'attaque se traduisant par une variation de la vitesse de rotation du rotor.

3. Aérogénérateur selon la revendication 1 et la revendication 2 comportant des moyens commandant le mouvement angulaire de l'axe à orientation variable du rotor dans un plan vertical parallèle à la direction du vent caractérisé en ce que les dits moyens coopérant avec un dispositif de mesure (54) de la vitesse de rotation du dit rotor (2) en sorte que le dit mouvement angulaire est commandé dans un sens ou dans l'autre selon le résultat de la dite mesure de manière à ce que l'inclinaison du plan de rotation du rotor lié au dit mouvement angulaire de l'axe permette d'obtenir une vitesse de rotation sensiblement constante quelle que soit la force du vent ou de réguler la vitesse en fonction de la valeur de la demande en énergie.

4. Aérogénérateur selon la revendication 1 caractérisé en ce que l'axe à inclinaison variable est doté en extrémité d'une chape (11) dans laquelle s'articule le rotor porte-pale et que de part et d'autre de sont axe d'articulation le dit rotor est doté de moyens d'amortissement (8) tels que des amortisseurs hydrauliques coopérant avec la chape.

5. Aérogénérateur suivant la revendication 1 caractérisé en ce que le rotor porte-pale est monté sur une rotule (6) solidaire de l'axe (5) et entre deux flasques (7) également solidaires du dit axe, les dites flasques et le dit rotor porte-pale étant reunis par des dispositifs d'amortissement (8).

6. Aérogénérateur selon la revendication 1 et la revendication 2 caractérisé en ce qu'il est doté d'une structure déformable (14) en quadrilatère constituée par au moins deux biellettes (17) et (18) d'inégale longueur articulées à un plateau inférieur (15) rotatif autour de la verticale et à un plateau supérieur (16) portant le rotor (2) et le générateur (4).

7. Aérogénérateur selon la revendication 1 et la revendication 3 caractérisé en ce que les moyens commandant le mouvement angulaire de l'axe à orientation variable (1) comprennent un bras rotatif (47) lié à l'une de ses extrémités au dit axe au niveau de l'axe de rotation (27) de celui-ci dans un chassis support (30) et à l'autre extrémité à un dispositif d'entraînement en rotation du dit axe constitué par un verin à vis (48) articulé à l'une de ses extrémités en bout du dit bras et à l'autre extrémité au bout d'un axe lié au bâti support et dont le mouvement qui entraîne en rotation le bras est commandé si necessaire dans un sens ou dans l'ature en fonction de la vitesse de rotation du rotor ou de la valeur de la puissance désirée par variation de la surface d'attaque au vent.

8. Aérogénérateur selon la revendication 1 et la revendication 3 caractérisé en ce que les moyens commandant le mouvement angulaire de l'axe (1) à orientation variable comprennent une roue dentée (52) fixée sur l'arbre de rotation (27) du dit axe (1) et coopérant avec une vis sans fin (53) liée à un moyen d'entraînement en rotation tel qu'un moteur électrique par exemple et dont le sens de rotation est commandé à partie d'un dispositif de mesure de la vitesse de rotation du rotor en sorte de provoquer si necessaire l'inclinaison du dit axe dans le sens permettant de conserver selon la variation de l'intensité du vent une vitesse de rotation du rotor sensiblement constante.

9. Aérogénérateur selon la revendication 3 caractérisé en ce que des montants (28 et 29) d'un bâti sur lequel est monté pivotant l'axe orientable (1) sont inclinés par rapport à la verticale du côté où le rotor (2) est susceptible de venir occuper une position sensiblement verticale offrant ainsi une surface d'attaque au vent maximale.

10. Aérogénérateur selon la revendication 1 et la revendication 3 caractérisé en ce qu'il comporte au moins un dispositif (32) détecteur de direction du vent.

11. Aérogénérateur selon les revendications 1, 3 et 10 caractérisé en ce que le dit dispositif (32) détecteur de direction du vent disposé dans le plan fictif vertical dans lequel l'axe orientable (1) est susceptible d'être incliné, est susceptible de commander si necessaire un moyen d'orientation du dit dispositif (32) en sorte d'emmener celui-ci face au vent par rotation angulaire de plus faible valeur possible de manière que le dit plan vertical dans lequel est susceptible de s'incliner l'axe (1) soit toujours parallèle à la direction du vent.

12. Aérogénérateur selon les revendications 1, 10 et 11 caractérisé en ce qu'il comporte des moyens (41) (44), (45) et (46) de limitation du mouvement angulaire du dispositif (32) autour de son axe de rotation qui limitent son mouvement à une valeur angulaire sensiblement égale ou supérieure à un tour en sorte que le cablage reliant les capteurs (40) du dit dispositif (32) détecteur de direction du vent à l'unité électrique de commande du moyen (33) d'orientation du dit dispositif (32) ne soit pas excessivement solicité en torsion de manière à éviter la rupture de celui-ci.

13. Aérogénérateur selon les revendications 1, 10, 11, 12 caractérisé en ce que les dits moyens sont constitués d'un doigt vertical (41) tournant simultanément avec le dispositif (32) et susceptible d'actionner au moyen d'une palette (44) articulée extérieurement à la trajectoire circulaire du dit doigt (41) et positionnée radialement à l'axe de rotation du dit dispositif (32) en travers de la dite trajectoire du dit doigt (41) l'un des micro-contacts (46) situés chacun de part et d'autre de la dite palette et susceptible de commander l'arrêt puis l'inversion du mouvement de rotation du dit dispositif (32) de manière à permettre le positionnement de ce dernier face au vent par rotation angulaire de plus grande valeur lorsque le positionnement du dit dispositif (32) face au vent par rotation angulaire de plus faible valeur n'est pas possible à cause des dits moyens de limitation du mouvement angulaire du dit dispositif.

14. Procédé de régulation de la vitesse de rotation du rotor (2) d'un aérogénérateur selon la revendication 1 et les revendications 2 et 3 caractérisé en ce qu'il consiste à mesurer par tous moyens connus (54) temporairement ou de façon permanente directement ou indirectement le vitesse de rotation du dit rotor (2) de comparer au moyen d'une unité (55) électrique ou électronique la dite mesure avec une vitesse de rotation dite vitesse de référence déterminée et fixée par le constructeur et à agir lorsqu'une différence et détectée entre la dite vitesse de rotation mesurée et la dite vitesse de référence sur les moyens d'inclinaison de l'axe orientable (1) de manière à présenter une surface d'attaque au vent plus réduite si la vitesse mesurée est supérieure à la vitesse de référence et plus grande si la vitesse mesurée est inférieure à la vitesse de référence, ceci jusqu'à ce que la dite différence entre les deux vitesses de rotation soit la plus petite possible.

15. Aérogénérateur selon la revendication 1 et les revendications 2 et 3 doté d'un système de régulation de la vitesse du rotor (2) selon le procédé conforme à la revendication 14 caractérisé en ce que le dispositif (54) de mesure de la vitesse de rotation du rotor (2) comporte un moyen électrique ou électronique de comptage des impulsions électriques produites par un organe rotatif lié au dit rotor tel que par exemple un disque partiellement occulté ou une masse magnétique coopérant de manière connue avec un moyen approprié de production d'impulsions électriques tel qu'un oscillateur électrique, cellules photo-électriques ou système détecteur de champ magnétique.

16. Aérogénérateur selon les revendications 1, 2 et 3 doté d'un système de régulation de la vitesse du rotor (2) selon le procédé conforme à la revendication 14 caractérisé en ce que le dispositif (54) de mesure de la vitesse de rotation du rotor (2) comporte un moyen de mesure de la fréquence du courant alternatif produit par un générateur électrique (4) entraîné par le dit rotor.

17. Aérogénérateur selon les revendications 1, 2, 3 doté d'un système de régulation de la vitesse du rotor (2) selon le procédé conforme à la revendication 14 caractérisé en ce que le dispositif (54) de mesure de la vitesse de rotation du rotor (2) comporte un moyen de mesure de la tension issue d'un générateur électrique (4) entraîné par le dit rotor.

18. Aérogénérateur selon la revendication 1 et les revendications 2 et 3 doté d'un système de régulation de la vitesse du rotor (2) selon le procédé conforme à la revendication 14 caractérisé en ce que le dispositif (54) de mesure de la vitesse de rotation du rotor (2) comporte un moyen de mesure du débit d'un fluide débité par un appareil tel qu'une pompe, une turbine ou un moteur hydraulique entraîné à partir du dit rotor.

19. Aérogénérateur selon la revendication 1 et les revendications 2 et 3 doté d'un système de régulation de la vitesse du rotor (2) selon le procédé conforme à la revendication 14 caractérisé en ce que le dispositif (54) de mesure de la vitesse de rotation du rotor (2) comporte un moyen de mesure de la pression d'un fluide débité par un appareil tel qu'une pompe ou une turbine entraîné à partir du dit rotor.

20. Aérogénérateur selon les revendications 1, 2, 3 caractérisé en ce qu'il comporte un moyen temporaire de lancement du rotor (2) en sorte de permettre le lancement de celui-ci lors du démarrage par vents de faibles intensités.

**Patentansprüche**

1. Windkraftmaschine, bestehend aus einer schwenkbaren Achse (1), versehen mit einem Rotor (2) an einem ihrer äußeren Enden mit mindestens einem Flügel (3) und mit ihrem anderen Ende auf herkömmliche Weise an einen Apparat angeschlossen (4), der die Energie, die von der Windkraftmaschine erzeugt wird, direkt nutzt oder umwandelt, zum Beispiel ein Stromgenerator oder ein System zur Drehzahlregelung des besagten Rotors je nach Windstärke oder des Energiebedarfswerts, dadurch gekennzeichnet, daß der Rotor mit Flügel (2) gelenkig in Bezug auf die schwenkbare Achse (1) ausgestattet ist.

2. Windkraftmaschine gemäß Anspruch 1 dadurch gekennzeichnet, daß das System zur Drehzahlregelung des Rotors aus Mitteln besteht, die automatisch die Winkelbewegung der schwenkbaren Achse in einer Vertikalen parallel zur Windrichtung, wenn die Windstärke zunimmt, steuert, sodaß die Rotorebene, die sich in Bezug auf die Vertikale in einer gebeugten Stellung befindet hinsichtlich einer äußersten Ausgangsposition, in der sie die größte Angriffsfläche für den Wind bietet, sich aufrichtet, um, je nach Windstärke oder Energiebedarfswert, eine äußerste Endposition einzunehmen, in der sie eine sehr geringe oder keine Angriffsfläche für den Wind bietet, und das wegen ihrer Schwenkbarkeit, oder eine Mittelstellung zwischen den beiden äußersten Positionen einnimmt, wobei sich die Veränderung der Angriffsfläche durch eine Drehzahlveränderung des Rotors ausdrückt.

3. Windkraftmaschine nach Anspruch 1 und 2, mit Mitteln ausgestattet, die die Winkelbewegung der Schwenkbaren Achse des Rotors in vertikaler Anordnung parallel zur Windrichtung steuert, dadurch gekennzeichnet, daß die genannten Mittel mit einer Meßeinrichtung (54) der Rotationsgeschwindigkeit besagten Rotors (2) zusammenwirken solcherart, daß besagte Winkelbewegung in der einen oder anderen Richtung je nach dem Ergebnis der besagten Messung gesteuert wird und somit erreicht wird, daß durch die gebeugte Rotationsfläche des Rotors, die mit besagter Winkelbewegung der Achse zusammenhängt, eine ungefähr konstante Rotationsgeschwindigkeit erhalten wird und das unabhängig von der Windstärke oder die Geschwindigkeit geregelt wird im Hinblick auf den Energiebedarfswert.

4. Windkraftmaschine nach Anspruch 1 dadurch gekennzeichnet, daß die schwenkbare Achse an ihrem Ende mit einem Gabelgelenk (11) versehen ist, mit dem der Rotor mit Flügel gelenkig verbunden ist, und daß besagter Rotor beidsetig seiner Drehachse über Stoßdämpfungsmittel (8) verfügt wie zum Beispiel Ölstoßdämpfer, die mit dem Gabelgelenk zusammenwirken.

5. Windkraftmaschine nach Anspruch 1 dadurch gekennzeichnet, daß der Flügelrotor auf eine Kugelgelenk (6) aufgebaut ist, das mit der Achse (5) eine Einheit bildet und sich zwischen zwei Flanschen (7) befindet die ebenfalls mit besagter Achse eine Einheit bilden, besagte Flansche und besagter Flügelrotor durch stoßdämpfende Mittel (8) verbunden sind.

6. Windkraftmaschine nach Anspruch 1 und 2 dadurch gekennzeichnet, daß sie über eine verformbare Struktur (14) in Viereckform verfügt bestehend aus mindestens zwei Schwingarmen (17) und (18) unterschiedlicher Länge, die gelenkig an einer unteren, um die Senkrechte drehbaren Platte (15) angebracht sind und ebenfalls an einer oberen Platte (16), die den Rotor (2) und den Generator (4) trägt.

7. Windkraftmaschine nach Anspruch 1 und 3 dadurch gekennzeichnet, daß die Mittel, die die Winkelbewegung der schwenkbaren Achse (1) steuern, einen Dreharm (47) beinhalten, der an einem Ende mit besagter Achse auf Höhe der Rotationsachse (27) derselben in einem Rahmen (30) verbunden ist und mit seinem anderen Ende mit einem Rotationsantrieb, einer Schraubenwinde (48) für besagte Achse verbunden ist, Schraubenwinde, die an einem ihrer Enden gelenkig an besagtem Arm angebracht ist und am anderen Ende mit einer Achse verbunden ist, die selbst mit einem Rahmen verbunden ist und deren Bewegung, die wiederum die rotationsbewegung des Arms betätigt, gesteuert wird und das wenn nötig in der einen oder anderen Richtung, durch die Veränderung der Angriffsfläche zum Wind und das je noch Rotationsgeschwindigkeit des Rotors oder des gewünschten Leistungswerts.

8. Windkraftmaschine nach Anspruch 1 und 3 dadurch gekennzeichnet daß die Mittel, die die Winkelbewegung der schwenkbaren Achse (1) steuern, ein Zahnrad (52), das auf der Rotationswelle (27) besagter Achse (1) angebracht ist, beinhaltet auf eine Schraube ohne Ende (53) einwirkt, die selbst wiederum an einen Rotationsantriebsmechanismus angeschlossen ist, zum Beispiel einem Elektromotor und dessen Rotationsrichtung von einer Meßeinrichtung der Rotationsgeschwindigkeit des rotors aus gesteuert wird und zwar so, daß, falls nötig, die Beugung besagter Achse möglich wird, um je nach Windstärke die Rotationsgeschwindigkeit des Rotors ziemlich konstant zu halten.

9. Windkraftmaschine nach Anspruch 3, dadurch gekennzeichnet daß Streben (28 und 29) eines Gestells, auf das die orientierbare Achse (1) schwenkbar ausgebaut ist, sich in gebeugter Stellung zur Vertikalen der Seite hin befinden, wo der Rotor (2) eine ungefähr vertikale Stellung einnimmt, um somit eine maximale Angriffsfläche für den Wind zu bieten.

10. Windkraftmaschine nach Anspruch 1 und 3 dadurch gekennzeichnet, daß sie mit mindestens einer Einrichtung zur Bestimmung der Windrichtung (32) ausgestattet ist.

11. Windkraftmaschine nach Anspruch 1, 3 und 10 dadurch gekennzeichnet, daß besagte Einrichtung (32) zur Bestimmung der Windrichtung und in der fiktiven Vertikalen befindlich, zu der sich die schwenkbare Achse (1) unter Umständen neigt, befähigt ist, wenn nötig eine Orientierungsmechanismus besagter Einrichtung (32) zu steuern, um jene durch Winkelrotation mit dem kleinstmöglichen Wert in eine Stellung zum Wind zu bringen, wodurch gewährleistet wäre, daß die Vertikale, in die sich die Achse (1) niegen wird, immer parallel zur Windrichtung ist.

12. Windkraftmaschine nach Anspruch 1, 10 und 11 dadurch gekennzeichnet, daß sie Mittel (41), (44), (45) und (46) zur Beschränkung der Winkelbewegung der Einrichtung (32) um seine Rotationsachse besitzt, und damit ihre Bewegung auf einen Winkelwert von ungefähr einer Drehung oder mehr beschränkt, damit die Kabel, die die Meßzellen (40) besagter Einrichtung (32) zur Windrichtungsbestimmung mit der elektrischen Steuerungseinheit des Orientierungsmittels (33) besagter Einrichtung (32) verbinden, nicht durch Drehbewegungen überbeansprucht werden, um damit das Durchreißen derselbigen zu vermeiden.

13. Windkraftmaschine nach Anspruch 1, 10, 11 und 12 dadurch gekennzeichnet daß besagte Mittel aus einem vertikalen Zapfen (41) bestehen, der gleichzeitig mit der Einrichtung (32) dreht und mithilfe eines Flügels (44), der außerhalb des Kreislaufs besagten Zapfens (41) und radial zur Rotationsachse der genannten Einrichtung (32) angeordnet ist und durch vorhergenannte Bahn desselbigen Zapfens (41) hindurchführt, einen der Mikrokontakte (46) steuert, die auf beiden Seiten besagten Flügels angebracht sind und dazu dienen, die Rotationsbewegung der genannten Einrichtung (32) zum Stillstand und zur Umkehrung der Bewegung zu bringen, um zu erreichen, daß letztere durch die größtmögliche Winkelrotation in eine Stellung gegen den Wind gebracht wird, wenn es nicht möglich ist, genannte Einrichtung (32) durch Winkelrotation mit schwächerem Wert in eine Stellung gegen den Wind zu bringen wegen obengenannter einschränkender Mittel der Winkelbewegung der genannten Einrichtung.

14. Regelungsverfahren der Rotationsgeschwindigkeit des Rotors (2) eines Aerogenerators nach Anspruch 1 und Anspruch 2 und 3 dadurch gekennzeichnet, daß es auf bekannte Weise (54) zeitweise oder dauernd, direkt oder indirekt die Rotationsgeschwindigkeit besagten Rotors (2) mißt, mithilfe einer elektrischen oder elektronischen Einheit (55) besagte Messung vergleicht mit einer Rotationsgeschwindigkeit, die als Bezugsgeschwindigkeit dient und vom Hersteller bestimmt und festgelegt wird, und in Aktion tritt, wenn eine Differenz zwischen genannter gemessener Rotationsgeschwindigkeit und der Bezugsgeschwindigkeit festgestellt wird in Bezug auf die Beugungsmittel der schwenkbaren Achse (1), somit zum Wind hin eine kleinere Angriffsfläche aufweist im Falle daß die gemessene Geschwindigkeit größer ist als die Bezugsgeschwindigkeit und eine größere Angriffsfläche aufweist für den Fall, wo die gemessene Geschwindigkeit kleiner ist als die Referenzgeschwindigkeit und das solange, bis genannte Differenz zwischen den beiden Rotationsgeschwindigkeiten so klein wie möglich ist.

15. Windkraftmaschine nach Anspruch 1 und Anspruch 2 und 3, mit einem System zur Regelung der Geschindigkeit des Rotors (2) ausgerüstet gemäß dem Verfahren, das in Anspruch 14 beschrieben wird dadurch gekennzeichnet, daß die Meßeinrichtung (54) zur Messung der Rotationsgeschwindigkeit des Rotors (2) ein elektrisches oder elektronisches Mittel zur Zählung der Elektrosignale beinhaltet, die von einem Rotationsorgan, das an besagten Rotor angeschlossen ist, produziert werden, Rotationsorgan wie zum Beispiel eine teilweise verdeckte Scheibe oder ein Magnet, der auf bekannte Weise mit einem entsprechenden Mittel zur Herstellung von Elektrosignalen zusammenwirkt, wie zum Beispiel ein elektrischer Oszillator, Photozellen oder ein System zur Auffindung von Magnetfeldern.

16. Windkraftmaschine nach Anspruch 1, 2 und 3, mit einem System zur Regelung der Rotor (2) -geschwindigkeit ausgestatet gemäß dem Verfahren, das in Anspruch 14 beschrieben wird dadurch gekennzeichnet, daß die Einrichtung (54) zur Messung der Rotationsgeschwindigkeit des Rotors (2) eine Meßeinrichtung zur Messung der Wechselstromfrequenz enthält, Wechselstrom, der von einen elektrischen Generator (4) produziert wird, der von genanntem Rotor angetrieben wird.

17. Windkraftmaschine nach Anspruch 1, 2 und 3, mit einem System zur Regelung der Geschwindigkeit des Rotors (2) ausgestattet gemäß dem Verfahren, das in Anspruch 14 beschrieben wird dadurch gekennzeichnet, daß die Einrichtung (54) zur Messung der Rotationsgeschwindigkeit des Rotors (2) eine Einrichtung zur Messung der Spannung aus dem elektrischen Generator (4), der von besagtem Rotor angetrieben wird, enthält.

18. Windkraftmaschine nach Anspruch 1 und Anspruch 2 und 3, mit einem System Regelung der Geschwindigkeit des Rotors (2) ausgestattet gemäß dem Verfahren, das in Anspruch 14 beschrieben wird dadurch gekennzeichnet, daß die Einrichtung (54) zur Messung der Rotationsgeschwindigkeit des Rotors (2) eine Einrichtung zur Messung einer Flüssigkeitsmenge, die von einem Apparat, zum Beispiel einer Pumpe, einer Turbine oder einem Hydraulikmotor gefördert wird und ab besagtem Rotor angetrieben wird, enthält.

19. Windkraftmaschine nach Anspruch 1 und Anspruch 2 und 3, mit einem System zur Regelung der Geschwindigkeit des Rotors (2) ausgestattet gemäß dem Verfahren, das in Anspruch 14 beschrieben wird dadurch gekennzeichnet, daß die Einrichtung (54) zur Messung der Rotationsgeschwindigkeit des Rotors (2) eine Einrichtung zur Messung des Flüssigkeitsdrucks einer Flüssigkeit, die von einem Apparat wie einer Pumpe oder einer Turbine gefördert wird und ab besagtem Rotor angetrieben wird, enthält.

20. Windkraftmaschine nach Anspruch 1, 2 und 3 dadurch gekennzeichnet daß er über ein kurzzeitiges Mittel zum Anwurf des Rotors (2) verfügt, um den Anwurf desselbigen zu bewerkstelligen im Falle eines Anlassens bei schwachem Wind.

**Claims**

1. An aerogenerator comprising an orientable axle (1) equipped with a rotor (2) comprising one blade (3) at least at one of its ends, and being at the other end linked by all means known in the art to an apparatus (4) for the direct utilization or transformation of the energy produced by said aerogenerator such as an electricity generator for example, and comprising also a rotation velocity regulation system of the said rotor working following the force of the wind or following the demand for energy, the blade-rotor (2) being itself hinged to the orientable axle.

2. An aerogenerator as claimed in Claim 1 in which the rotor velocity regulation system is constituted of means controlling automatically the angular movement of the orientable axle within a vertical plane parallel to the direction toward which the wind is blowing when the wind intensity increases so that the rotor plane inclined with respect to a vertical line by virtue of an initial limit position at which the windward surface is maximum, rights up to place itself at either a terminal limit position following wind intensity or the demand for energy at which the windward surface becomes less important or nul by virture of its articulation, or places itself at an intermediary position halfway between the two limit positions, the variation of the windward surface entailing a variation of the rotor rotation velocity.

3. An aerogenerator as claimed in Claims 1 and 2 comprising means controlling the angular movement of the rotor orientable axle in a vertical plane parallel to the direction toward which the wind is blowing in which said means co-operate with a device (54) for the measurement of the rotation velocity of said rotor (2) so that said angular movement is driven toward one direction or another by virtue of the result of said measurement so that the inclination of the rotor rotation plane in relation to the axle angular movement enables to obtain a virtually constant rotation velocity whatever the intensity of the wind be, or to regulate the velocity in accordance with the demand for energy.

4. An aerogenerator as claimed in Claim 1 in which the orientable axle comprises at one end a fork yoke (11) in which the blade-rotor hinges and in which, on whatever side of its rotation axle, said rotor comprises shock absorbing means (8) such as hydraulic shock absorbers co-operating with the fork-yoke.

5. An aerogenerator as claimed in Claim 1 in which the blade-rotor is mounted on a swivel (6) integral with the axle (5) and between two flanges (7) also integral with said axle, said flanges and said blade-rotor being bound by shock absorbing devices (8).

6. An aerogenerator as claimed in Claims 1 and 2 comprising a structure (14) which can deform and take the shape of a quadrangle, two rods (17 and 18) of different lengths hinged to a lower plate (15) rotating with respect to a vertical line, and hinged to an upper plate (16) supporting rotor (2) and generator (4).

7. An aerogenerator as claimed in Claims 1 and 3 in which the means controlling the angular movement of the orientable axle (1) comprises a rotating arm (47) connected by one of its end to said axle at the level of its rotation axle (27) in a support frame (30) and at the other end connected to a device driving a rotating movement constituted of a screw jack (48) hinged at one of its ends to the end of an axle connected to the support frame whose arm rotation driving movement is actuated when necessary toward one direction or the other following the rotation velocity of the rotor or the demand for energy by virtue of the variation of the windward surface.

8. An aerogenerator as claimed in Claims 1 and 3 in which the means controlling the angular movement of the orientable axle (1) comprise a tooth-wheel (52) secured to the rotation shaft (27) of said axle (1), said tooth-wheel co-operating with a worm (53 linked to a rotation driving device such as an electric engine for example whose rotation direction is controlled from a device for the measurement of the rotor rotation velocity so as to actuate whenever necessary the tilt of said axle in the direction allowing to maintain a virtually constant rotation velocity whatever wind intensity variations may be.

9. An aerogenerator as claimed in claim 3 in which uprights (28 and 29) of a frame on which the orientable axle is mounted in order to pivot are inclined with respect to a vertical line on the side which rotor (2) is likely to place itself at in a virtually vertical position thus offering a maximum surface to the wind.

10. An aerogenerator as claimed in Claims 1 and 3 comprising one wind direction sensing device (32) at least.

11. An aerogenerator as claimed in Claims 1, 3 and 10 in which the said wind direction sensing device (32) located in the fictitious vertical plane toward which the orientable axle is likely to tilt, is itself likely to control whenever necessary an orientation means of said device (32) so as to drive this device windwards by virtue of the lowest possible angular rotation so that said vertical plane toward which axle (1) is likely to incline remains constantly parallel to the direction of the wind.

12. An aerogenerator as claimed in Claims 1, 10 and 11 comprising means (41, 44, 45 and 46) for the limitation of the angular movement of device (32) around its rotation axle, said means restricting the movement to an angular value superior or virtually equal to one revolution so that the cables interconnecting the sensors (40) of said wind direction sensing device (32) to the electrical unit controlling the orientation means (33) of said device (32) do not undergo excessive torsional stress and do not break.

13. An aerogenerator as claimed in Claims 1, 10, 11 and 12 in which said means are constituted of a vertical finger (41) which revolves simultaneously with device (32) and which, by virtue of a small blade (44) articulated outside to the circular trajectory of said finger (41) and placed radially with respect to the rotation axle of said device (32) across said trajectory of said finger (41), is likely to actuate one of the micro-contacts respectively located on both sides of said small blade and likely to control the stop and the inversion processes of the rotation movement of said device (32) so as to enable this device (32) to take place windwards by virtue of a higher angular rotation when a windwards location of said device (32) is made impossible on account of said limitation means of said device angular movement.

14. A rotation velocity regulation system of an aerogenerator rotor as claimed in Claims 1, 2 and 3 consisting in measuring by virtue of all means known in the art (54) the rotation velocity of said rotor temporarily or constantly directly or indirectly, and in comparing by virtue of an electric or electronic unit said measure with one rotation velocity called reference velocity in compliance with manufacturer's standards, and in operating each time a difference is registered between said measured rotation velocity and said reference measure on the tilting means of the orientable axle (1) so as to expose a smaller surface facing the wind if the measured velocity is superior to the reference velocity or to expose of larger surface to the wind if the measured velocity is inferior to the reference velocity, this until said difference between the two rotation velocities become the lowest possible.

15. An aerogenerator as claimed in Claims 1, 2 and 3 comprising a velocity regulation system of the rotor (2) in compliance with the process claimed in Claim 14 in which the measurement device of the rotor (2) rotation comprises an electric or electronic means for registering the electric impulses generated by a rotating organ connected to said rotor such as partially concealed disc for instance or a magnetic mass co-operating by virtue of means known in the art with an appropriate device for the production of electric impulses such as an electric oscillator, photo-electric cells or magnetic field sensing device.

16. An aerogenerator as claimed in Claims 1, 2 and 3 comprising a rotor (2) velocity regulation system in accordance with the process set forth in Claim 14 in which the measurement device of the rotor (2) rotation velocity regulation system comprises a means for the measurement of the alternating current frequency produced by an electric generator driven by said rotor.

17. An aerogenerator as claimed in Claim 1, 2 and 3 comprising a rotor (2) rotation velocity regulation system in accordance with claim 14 in which the rotor (2) rotation velocity measurement device comprises a means for the measurement of the voltage supplied by the electric generator driven by said rotor.

18. An aerogenerator as claimed in Claim 1, 2 and 3 comprising one rotor (2) rotation velocity measurement system in accordance with the process set forth in claim 14 in which the rotor (2) rotation velocity measurement system comprises a means for the measurement of a fluid flow by virtue of an apparatus such as a pump, a turbine or a hydraulic engine driven from said rotor.

19. An aerogenerator as claimed in Claims 1, 2 and 3 comprising a rotor (2) rotation velocity regulation system in accordance with Claim 14 in which the rotor (2) rotation velocity measurement system comprises a means for the measurement of the pressure of a fluid supplied by an apparatus such as a pump, or a turbine driven from said rotor.

20. An aerogenerator as claimed in Claims 1 and 2 and 3 comprising a temporary means for actuating the rotor (2) so as to initiate the motion of said rotor in the event of low intensity winds.

Fig.1

Fig.2

Fig.3

Fig. 4

vue suivant F

2

**0 033 258**

Fig.5

coupe BB

Fig. 6

3

coupe AA

_Fig. 7_

_Fig. 8_

4

Fig. 9

Fig.10

Fig.11

**Mesure Vitesse rotor ($V_m$)** — 54

**Comparaison avec Vitesse Référence ($V_r$)** — 55

Amplification Différence

$V_m < V_r$

$V_m > V_r$

**Unité de Commande** — 56

<u>Fig.12</u>